# EUROPEAN PATENT SPECIFICATION

(11) **EP 2 295 877 B1**
(45) Date of publication and mention of the grant of the patent: **26.07.2017**
(21) Application number: 10250770.4
(22) Date of filing: 14.04.2010
(51) Int. Cl.: F24F 1/00

(54) **Air conditioner**
Klimaanlage
Climatiseur

(30) Priority: 19.08.2009 KR 20090076837
(43) Date of publication of application: 16.03.2011
(60) Divisional application: 14194783.8
(73) Proprietor: LG Electronics Inc., Youngdungpo-ku Seoul (KR)
(72) Inventor: Yoon, Pil Hyun, Changwon-si, Kyungsangnam-do 641-110 (KR); Kwag, Hyun Ju, Changwon-si, Kyungsangnam-do 641-110 (KR); Jang, Seok Hoon, Changwon-si, Kyungsangnam-do 641-110 (KR)
(74) Representative: Boult Wade Tennant

(56) References cited:
- EP-A2- 1 712 854
- US-A- 3 866 439
- US-A- 4 302 945
- US-A- 4 407 137
- US-A1- 2006 144 060

## Description

### BACKGROUND OF THE INVENTION

### 1. Field of the Invention

The present invention relates to an air conditioner, and more particularly, to an air conditioner adapted for defrosting an outdoor heat exchanger using hot gas.

### 2. Description of the Related Art

In general, an air conditioner is an apparatus for cooling or heating indoor using a refrigeration cycle including a compressor, an outdoor heat exchanger, an expansion device, and an indoor heat exchanger. That is, the air conditioner can be formed as a cooler for cooling indoor or as a heater for heating indoor. The air conditioner can be formed as an air conditioner for both cooling and heating for cooling or heating indoor.

When the air conditioner is formed as an air conditioner for both cooling and heating, the air conditioner may include a 4-way valve for changing a flow path of a refrigerant compressed in a compressor according to a cooling operation and a heating operation. That is, when a cooling operation is performed, a refrigerant compressed in the compressor is flowed to an outdoor heat exchanger by passing through a 4-way valve, and the outdoor heat exchanger functions as a condenser. A refrigerant condensed in the outdoor heat exchanger is expanded in the expansion device and is injected into an indoor heat exchanger. In this case, the indoor heat exchanger functions as an evaporator, and a refrigerant evaporated in the indoor heat exchanger is injected into the compressor by passing through again the 4-way valve.

When a heating operation is performed, a refrigerant compressed in the compressor flows to the indoor heat exchanger by passing through the 4-way valve, and the indoor heat exchanger functions as a condenser. A refrigerant condensed in the indoor heat exchanger is expanded in the expansion device and is injected into the outdoor heat exchanger. In this case, the outdoor heat exchanger functions as an evaporator, and a refrigerant evaporated in the outdoor heat exchanger is injected into the compressor by passing through again the 4-way valve.

In such an air conditioner, water is generated on a surface of a heat exchanger acting as an evaporator while operating, and water is generated on the surface of an indoor heat exchanger in a case of a cooling operation and water is generated on a surface of an outdoor heat exchanger in a case of a heating operation. In this case, upon performing a heating operation, when condensed water generated on a surface of the outdoor heat exchanger is frozen, a smooth flow and heat exchange of outdoor air are disturbed, thereby deteriorating heating performance.

Therefore, in order to remove frosted condensate water, when a heating operation is stopped while performing a heating operation and a refrigerating cycle is operated in an inverse cycle (i.e., a cooling operation), a refrigerant of a high temperature and a high pressure passes through the outdoor heat exchanger and frost on a surface of the outdoor heat exchanger is melted by heat of the refrigerant. However, when a defrost operation is performed by the inverse cycle, indoor heating should be stopped.

US 4,407,137 discloses promoting effective heat transfer between refrigerant flowing through a heat exchanger and air flowing thereover using a headering arrangement such that during defrost a portion of the heat exchanger is isolated. US 2006/0144060 discloses a heat exchanger liquid refrigerant defrost system to defrost the coil subsystems used on an outdoor hear exchanger.

### SUMMARY OF THE INVENTION

The present invention has been made in an effort to solve the above problems, and the present invention provides an air conditioner that can effectively perform division defrost of an outdoor heat exchanger and effectively remove the remaining frost of a central part of the outdoor heat exchanger.

Accordingly, the invention provides an air conditioner as set out in claim 1.

The communication pipe may connect a lowest branch pipe of the branch pipes of the first refrigerant distribution device and an uppermost branch pipe of the branch pipes of the second refrigerant distribution device.

The air conditioner may further include a third refrigerant distribution device connected to all of the plurality of refrigerant tubes using the branch pipe.

The air conditioner may further include: compressors for compressing a refrigerant; hot gas pipes for connecting outlets of the compressors and inlets of the first and second refrigerant distribution devices, respectively; a first hot gas valve for adjusting hot gas flowing from the outlet of the compressor to the first refrigerant distribution device through the hot gas pipe; and a second hot gas valve for adjusting hot gas flowing from the outlet of the compressor to the second refrigerant distribution device through the hot gas pipe.

The hot gas pipes may connect the outlets of the compressors and the inlet of the first and second refrigerant distribution devices based on when performing a heating operation of the air conditioner.

The air conditioner may further include: a first expansion valve for intercepting injection of a refrigerant to the first refrigerant distribution device when hot gas is injected through the first hot gas valve; and a second expansion valve for intercepting injection of a refrigerant to the second refrigerant distribution device when hot gas is injected through the second hot gas valve.

The hot gas pipes may include: a sharing hot gas pipe connected to a cooling/heating switching valve connection pipe between a cooling/heating switching valve for switching cooling/heating and the compressors; a first refrigerant distribution device connection pipe for connecting the sharing hot gas pipe and the inlet of the first refrigerant distribution device; and a second refrigerant distribution device connection pipe for connecting the sharing hot gas pipe and the inlet of the second refrigerant distribution device.

The first expansion valve may be installed in the first refrigerant distribution device connection pipe, and the second expansion valve may be installed in the second refrigerant distribution device connection pipe.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a perspective view illustrating an air conditioner according to an exemplary embodiment of the present invention;
FIG. 2 is a schematic diagram illustrating a refrigerant flow of an outdoor device when performing a cooling operation of an air conditioner according to an exemplary embodiment of the present invention;
FIG. 3 is a schematic diagram illustrating a refrigerant flow of an outdoor device when performing a heating operation of an air conditioner according to an exemplary embodiment of the present invention;
FIG. 4 is a schematic diagram illustrating a refrigerant flow of an outdoor device when defrosting an upper part of an outdoor heat exchanger of an air conditioner according to an exemplary embodiment of the present invention;
FIG. 5 is a schematic diagram illustrating a refrigerant flow of an outdoor device when defrosting a lower part of an outdoor heat exchanger of an air conditioner according to an exemplary embodiment of the present invention;
FIG. 6 is a perspective view illustrating a distribution device shown in FIG. 5;
FIG. 7 is a block diagram illustrating a control process of an air conditioner according to an exemplary embodiment of the present invention;
FIG. 8 is an enlarged schematic diagram illustrating a refrigerant flow of an outdoor device when performing defrost of an upper part/evaporation of a lower part of an outdoor heat exchanger of an air conditioner according to another example not being part of the invention; and
FIG. 9 is an enlarged schematic diagram not being part of the invention illustrating a refrigerant flow of the outdoor device of figure 8 when performing defrost of a lower part/evaporation of an upper part of the outdoor heat exchanger.

### DESCRIPTION OF THE PREFERRED EMBODIMENT

Hereinafter, exemplary embodiments according to the present invention will be described in detail with reference to the accompanying drawings.

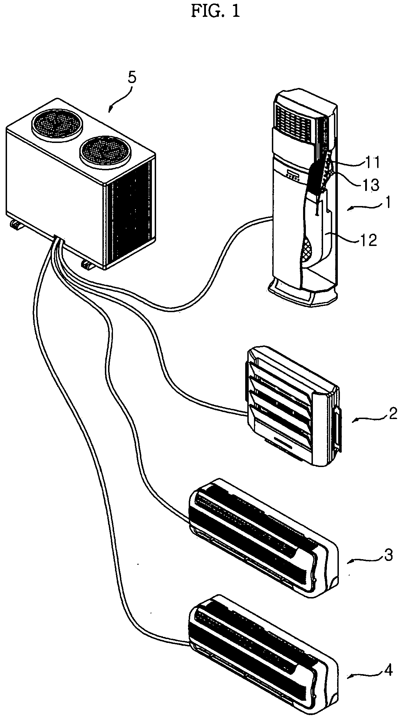

FIG. 1 is a perspective view illustrating an air conditioner according to an exemplary embodiment of the present invention.

As shown in FIG. 1, the air conditioner according to the present exemplary embodiment includes a plurality of indoor devices 1 to 4 and an outdoor device 5 connected to the plurality of indoor devices 1 to 4 and is formed as a multi-type heat pump air conditioner for selectively cooling and heating.

In the plurality of indoor devices 1 to 4, a liquid pipe through which a liquid refrigerant passes and a gas pipe through which a gas refrigerant passes are connected in parallel.

Each of the plurality of indoor devices 1 to 4 includes an indoor heat exchanger 11 for cooling or heating indoor air while a refrigerant exchanges heat with the indoor air, an indoor ventilator 12 for inhaling indoor air into the indoor devices 1 to 4, exchanging heat with the indoor heat exchanger 11, and discharging the indoor air to the outside of the indoor devices 1 to 4, and an indoor expansion device 13 for expanding a refrigerant flowed toward the indoor heat exchanger 11.

The indoor expansion device 13 is formed with an electronic expansion valve such as LEV or EEV that can adjust expansion of a refrigerant.

Hereinafter, the outdoor device 5 is described in detail.

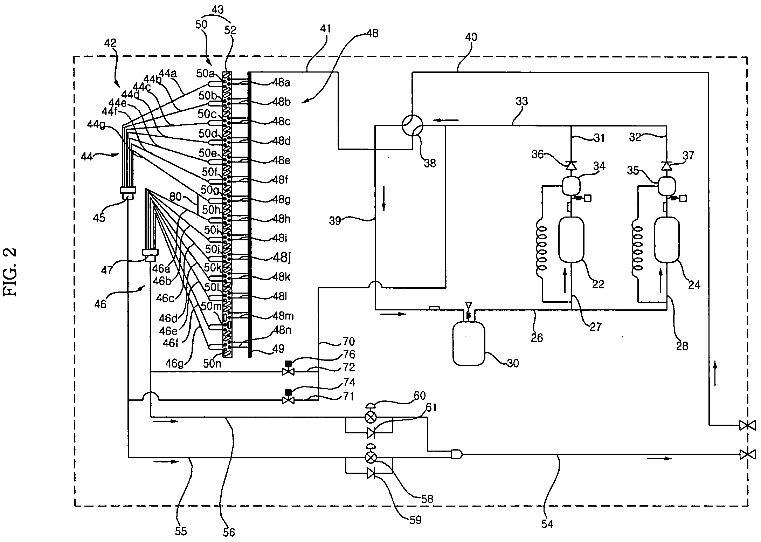

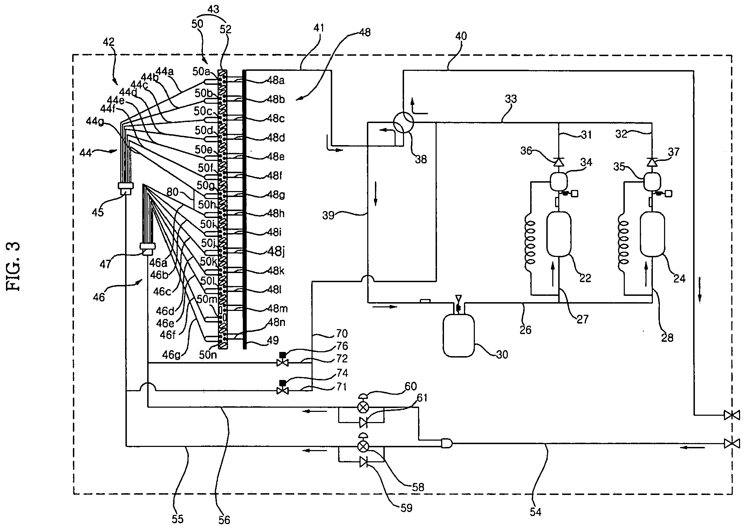

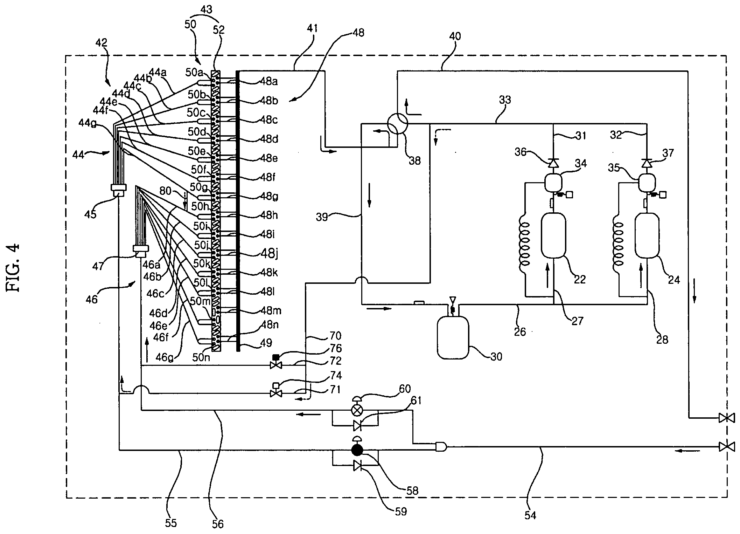

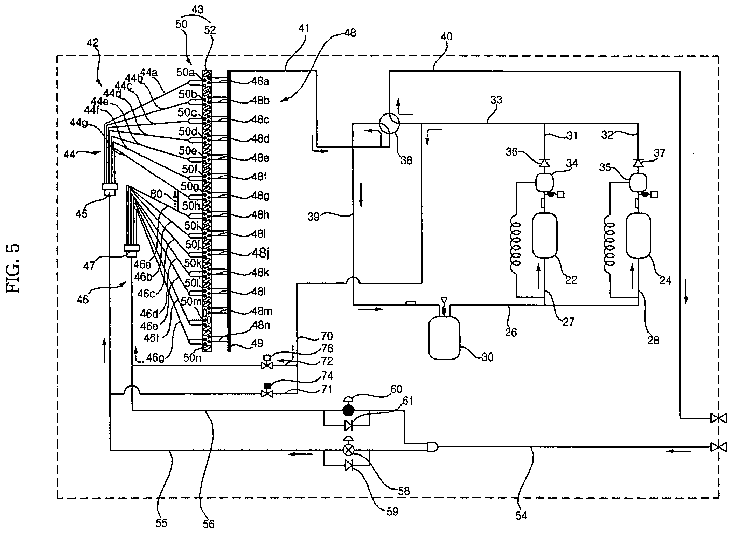

FIG. 2 is a schematic diagram illustrating a refrigerant flow of an outdoor device when performing a cooling operation of an air conditioner according to an exemplary embodiment of the present invention, FIG. 3 is a schematic diagram illustrating a refrigerant flow of an outdoor device when performing a heating operation of an air conditioner according to an exemplary embodiment of the present invention, FIG. 4 is a schematic diagram illustrating a refrigerant flow of an outdoor device when performing defrost in an upper part/evaporation in a lower part in an outdoor heat exchanger of an air conditioner according to an exemplary embodiment of the present invention, and FIG. 5 is a schematic diagram illustrating a refrigerant flow of an outdoor device when performing defrost in a lower part /evaporation in an upper part in an outdoor heat exchanger of an air conditioner according to an exemplary embodiment of the present invention.

The air conditioner according to the present exemplary embodiment includes compressors 22 and 24, a cooling/heating switching valve 38, an outdoor heat exchanger 42, outdoor expansion devices 58 and 60, hot gas pipes 70, 71, and 72, and hot gas valves 74 and 76.

The compressors 22 and 24 compress a refrigerant, are provided in plural, and in the compressors 22 and 24, refrigerant flow paths are connected in parallel.

One of the compressors 22 and 24 is formed as a capacity variable compressor 22 such as an inverter compressor and the other one is formed as a constant speed compressor 24.

In the compressors 22 and 24, inhalation pipes 26, 27, and 28 are connected to an accumulator 30, and the inhalation pipes 26, 27, and 28 include an accumulator connection pipe 26 connected to the accumulator 30 and compressor inhalation pipes 27 and 28 for connecting the accumulator connection pipe 26 and the inhalation side of the compressors 22 and 24.

In the compressors 22 and 24, discharge pipes 31, 32, and 33 are connected to one cooling/heating switching valve 38, and the discharge pipes 31, 32, and 33 include compressor discharge pipes 31 and 32 connected to the discharge side of the compressors 22 and 24 and a cooling/heating switching valve connection pipe 33 for connecting the compressor discharge pipes 31 and 32 and the cooling/heating switching valve 38.

In the compressor discharge pipes 31 and 32, oil separators 34 and 35 for separating oil from a refrigerant and oil discharged from the compressors 22 and 24 and for recovering the oil to the inhalation pipes 26, 27, and 28 and check valves 36 and 37 for preventing flowing backward of a refrigerant passing through the oil separators 34 and 35 are installed.

The cooling/heating switching valve 38 guides a refrigerant compressed in the compressors 22 and 24 to the outdoor heat exchanger 42 and guides a refrigerant flowed in the indoor devices 1 to 4 to the accumulator 30 upon performing a cooling operation, and guides a refrigerant compressed in the compressors 22 and 24 to the indoor devices 1 to 4 and guides a refrigerant flowed in the outdoor heat exchanger 42 to the accumulator 30 upon performing a heating operation and is connected to the compressors 22 and 24 using the discharge pipes 31, 32, and 33, is connected to the accumulator 30 using an accumulator connection pipe 39, is connected to the indoor heat exchanger 11 using an indoor heat exchanger connection pipe 40, and is connected to the outdoor heat exchanger 42 using an outdoor heat exchanger connection pipe 41.

The outdoor heat exchanger 42 is an evaporator/condenser for evaporating a refrigerant while exchanging heat of the refrigerant and outdoor air upon performing a cooling operation and for condensing a refrigerant while exchanging heat of the refrigerant and outdoor air upon performing a heating operation.

The outdoor heat exchanger 42 includes an outdoor heat exchange unit 43 in which a refrigerant exchanges heat, first and second refrigerant distribution devices 44 and 46 for distributing a refrigerant to the outdoor heat exchange unit 43 upon performing a heating operation and for guiding to collect a refrigerant passing through the outdoor heat exchange unit 43 upon performing a cooling operation, and a third refrigerant distribution device 48 for guiding to collect a refrigerant passing through the outdoor heat exchange unit 43 upon performing a heating operation and for distributing a refrigerant to the outdoor heat exchange unit 43 upon performing a cooling operation.

The outdoor heat exchanger 42 is formed to inject a refrigerant of different temperatures into an upper part and a lower part of the outdoor heat exchange unit 43 by the first and second refrigerant distribution devices 44 and 46 upon performing a heating operation and is formed to inject a refrigerant of the same temperature into an upper part and a lower part of the outdoor heat exchange unit 43 by the third refrigerant distribution device 48 upon performing a cooling operation.

In the outdoor heat exchange unit 43, a plurality of refrigerant tubes 50 are disposed to be separated in a plurality of columns in a vertical direction to exchange heat of a refrigerant and outdoor air, and a plurality of electric heating pins 52 are connected to the plurality of refrigerant tubes 50.

In the first refrigerant distribution device 44, branch pipes 44a, 44b, 44c, 44d, 44e, 44f, and 44g are connected to a plurality of refrigerant tubes 50a, 50b, 50c, 50d, 50e, 50f, and 50g of an upper part of the plurality of refrigerant tubes 50.

The first refrigerant distribution device 44 further includes a first distribution device body 45 to which the plurality of branch pipes 44a, 44b, 44c, 44d, 44e, 44f, and 44g of the first refrigerant distribution device 44 are connected.

In the second refrigerant distribution device 46, branch pipes 46a, 46b, 46c, 46d, 46e, 46f, and 46g are connected to a plurality of refrigerant tubes 50h, 50i, 50j, 50k, 501, 50m, and 50n, respectively, of a lower part of the plurality of refrigerant tubes 50.

The second refrigerant distribution device 46 further includes a second distribution device body 47 to which the plurality of branch pipes 46a, 46b, 46c, 46d, 46e, 46f, and 46g of the second refrigerant distribution device 46 are connected.

In the first distribution device body 45 and the second distribution device body 47, refrigerant pipes 54, 55, and 56 are connected in parallel so that a refrigerant flowed in the plurality of refrigerant tubes 50 of the outdoor heat exchange unit 43 flows to the indoor devices 1 to 4 upon performing a cooling operation and a refrigerant flowed in the indoor devices 1 to 4 flows to the plurality of refrigerant tubes 50 of the outdoor heat exchange unit 43 upon performing a heating operation.

The refrigerant pipes 54, 55, and 56 include an indoor device connection pipe 54 connected to the indoor devices 1 to 4, a first distribution device body connection pipe 55 connected to the indoor device connection pipe 54 and the first distribution device body 45, and a second distribution device body connection pipe 56 connected to the indoor device connection pipe 54 and the second distribution device body 47.

In the third refrigerant distribution device 48, all of the plurality of refrigerant tubes 50a, 50b, 50c, 50d, 50e, 50f, and 50g of an upper part of the plurality of refrigerant tubes 50 and the plurality of refrigerant tubes 50h, 50i, 50j, 50k, 501, 50m, and 50n of a lower part thereof and branch pipes 48a, 48b, 48c, 48d, 48e, 48f, 48g, 48h, 48i, 48j, 48k, 481, 48m, and 48n are connected, respectively.

The third refrigerant distribution device 48 further includes a third distribution device body 49 to which the plurality of branch pipes 48a, 48b, 48c, 48d, 48e, 48f, 48g, 48h, 48i, 48j, 48k, 481, 48m, and 48n of the third refrigerant distribution device 48 are connected.

The third distribution device body 49 is connected to the outdoor heat exchanger connection pipe 41 so that a refrigerant flowed from the cooling/heating switching valve 38 flows to the plurality of refrigerant tubes 50 of the outdoor heat exchange unit 43 upon performing a cooling operation and a refrigerant flowed from the plurality of refrigerant tubes 50 of the outdoor heat exchange unit 43 flows to the cooling/heating switching valve 38 upon performing a heating operation.

The outdoor expansion devices 58 and 60 include a first expansion valve 58 for expanding a refrigerant flowing toward the first refrigerant distribution device 44 or for intercepting injection of a refrigerant to the first refrigerant distribution device 44 and a second expansion valve 60 for expanding a refrigerant flowing toward the second refrigerant distribution device 46 or for intercepting injection of a refrigerant to the second refrigerant distribution device 46.

The first expansion valve 58 is installed in the first distribution device body connection pipe 55.

When hot gas is injected through a first hot gas valve (not shown) to be described later upon defrosting an upper part of the outdoor heat exchanger 42, the first expansion valve 58 is controlled so that a refrigerant injected from the indoor devices 1 to 4 does not flow to the first refrigerant distribution device 44.

In the first expansion valve 58, upon performing a cooling operation, a first expanding valve 59 is connected parallel to the first expansion valve 58 so that a refrigerant flowed from the outdoor heat exchanger 42 bypasses the first expansion valve 58.

The second expansion valve 60 is installed in the second distribution device body connection pipe 56.

When hot gas is injected through a second hot gas valve (not shown) to be described later upon defrosting a lower part of the outdoor heat exchanger 42, the second expansion valve 60 is controlled so that a refrigerant injected from the indoor devices 1 to 4 does not flow to the second refrigerant distribution device 46.

In the second expansion valve 60, upon performing a cooling operation, a second expanding valve 61 is connected parallel to the second expansion valve 60 so that a refrigerant flowed from the outdoor heat exchanger 42 bypasses the second expansion valve 60.

Hot gas pipes 70, 71, and 72 are installed to connect an outlet of the compressors 22 and 24 and inlets of the first and second refrigerant distribution devices 44 and 46 based on when performing a heating operation of the air conditioner.

The hot gas pipes 70, 71, and 72 include a sharing hot gas pipe 70 connected to a refrigerant pipe, particularly the cooling/heating switching valve connection pipe 33, between the compressors 22 and 24 and the cooling/heating switching valve 38, a first refrigerant distribution device connection pipe 71 for connecting the sharing hot gas pipe 70 and an inlet of the first refrigerant distribution device 44, and a second refrigerant distribution device connection pipe 72 for connecting the sharing hot gas pipe 70 and an inlet of the second refrigerant distribution device 46.

In the hot gas pipes 70, 71, and 72, a first hot gas valve 74 for adjusting hot gas flowing from an outlet of the compressors 22 and 24 to the first refrigerant distribution device 44 through the hot gas pipes 70 and 71 and a second hot gas valve 76 for adjusting hot gas flowing from an outlet of the compressors 22 and 24 to the second refrigerant distribution device 46 through the hot gas pipes 70 and 72 are installed.

The first hot gas valve 74 is installed in the first refrigerant distribution device connection pipe 71. The first hot gas valve 74 is opened when defrosting an upper part of the outdoor heat exchanger 42 and is closed in a case other than when defrosting an upper part of the outdoor heat exchanger 42.

The second hot gas valve 76 is installed in the second refrigerant distribution device connection pipe 72. The second hot gas valve 76 is opened when defrosting a lower part of the outdoor heat exchanger 42 and is closed in a case other than when defrosting a lower part of the outdoor heat exchanger 42.

The air conditioner according to the present exemplary embodiment further includes a communication pipe 80 for communicating one 44g of the branch pipes 44a, 44b, 44c, 44d, 44e, 44f, and 44g of the first refrigerant distribution device 44 and one 46a of the branch pipes 46a, 46b, 46c, 46d, 46e, 46f, and 46g of the second refrigerant distribution device 46.

In the communication pipe 80, when defrosting an upper part of the outdoor heat exchanger 42, some of hot gas supplied to an upper part of the outdoor heat exchanger 43 through the first refrigerant distribution device 44 is also defrosted while being supplied to one of the plurality of refrigerant tubes 50h, 50i, 50j, 50k, 501, 50m, and 50n of a lower part of the outdoor heat exchanger 42, and when defrosting a lower part of the outdoor heat exchanger 42, some of hot gas supplied to a lower part of the outdoor heat exchanger 43 through the second refrigerant distribution device 46 is also defrosted while being supplied to one of the plurality of refrigerant tubes 50a, 50b, 50c, 50d, 50e, 50f, and 50g of an upper part of the outdoor heat exchanger 42.

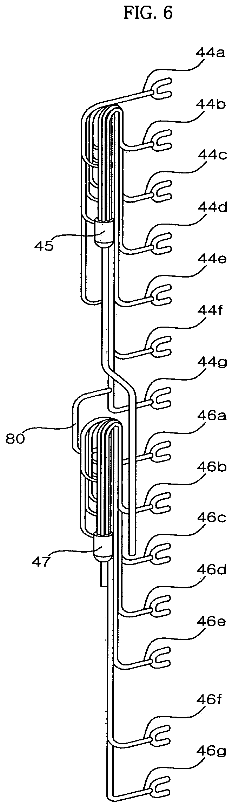

FIG. 6 is an enlarged perspective view illustrating first and second refrigerant distribution devices shown in FIGS. 2 to 5.

When defrosting an upper part of the outdoor heat exchanger 42, in order to defrost together a central part of the outdoor heat exchanger 42, and when defrosting a lower part of the outdoor heat exchanger 42, in order to defrost together a central part of the outdoor heat exchanger 42, the communication pipe 80 is installed to connect the lowest branch pipe 44g of the branch pipes 44a, 44b, 44c, 44d, 44e, 44f, and 44g of the first refrigerant distribution device 44 and the uppermost branch pipe 46a of the branch pipes 46a, 46b, 46c, 46d, 46e, 46f, and 46g of the second refrigerant distribution device 46.

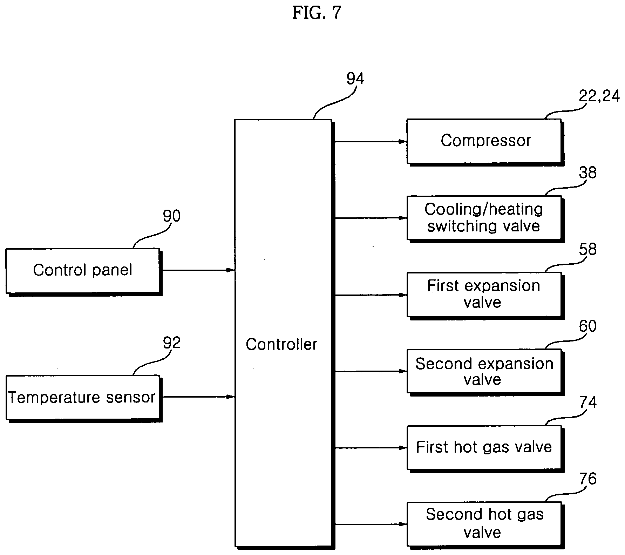

FIG. 7 is a block diagram illustrating a control process of an air conditioner according to an exemplary embodiment of the present invention.

The air conditioner according to the present exemplary embodiment includes a control panel 90 for manipulating the air conditioner, a temperature sensor 92 for determining a defrost condition of the outdoor heat exchanger 42, and a controller 94 for controlling the compressors 22 and 24 and the cooling/heating switching valve 38 according to a cooling/heating operation manipulated through the control panel 90 and for performing a heating/defrost operation according to a defrost condition such as a temperature detected in the temperature sensor 92 when performing a heating operation.

Here, the temperature sensor 92 may be formed with an upper temperature sensor installed in an upper part of the outdoor heat exchanger 42 and a lower temperature sensor installed in a lower part of the outdoor heat exchanger 42 and may be formed with one temperature sensor installed in one of an upper part and a lower part of the outdoor heat exchanger 42.

The controller 94 determines whether frost is generated according to a temperature value detected in the upper temperature sensor and the lower temperature sensor, determines whether defrost is complete, and determines whether frost is generated and determines whether defrost is complete according to a temperature value detected in one temperature sensor.

The controller 94 may determine whether frost is performed in consideration of both a temperature value detected in the temperature sensor 92 and a sum time period of a heating operation, may determine whether frost is performed in consideration of only one of a temperature value detected in the temperature sensor 92 and a sum time period of a heating operation, and may use various defrost conditions.

The controller 94 controls a mode of the cooling/heating switching valve 38 to a cooling mode upon performing a cooling operation and controls a mode of the first and second hot gas valves 74 and 76 to a close mode.

The controller 94 controls a mode of the cooling/heating switching valve 38 to a heating mode upon performing a heating operation and controls a mode of the first and second hot gas valves 74 and 76 to a close mode.

When a defrost condition is obtained while performing a heating operation, the controller 94 sustains the cooling/heating switching valve 38 in a present state, which is a heating mode, and controls the first expansion valve 58 to be in a close mode while controlling the first hot gas valve 74 to be in an opening mode, and if a predetermined time period has elapsed or if a temperature detected in the temperature sensor 92 rises a defrost release temperature or more of an upper part, the controller 94 controls the first expansion valve 58 to be in an opening mode while controlling the first hot gas valve 74 to be in a close mode and controls the second expansion valve 76 to be in a close mode while controlling the second expansion valve 76 to be in an opening mode.

Hereinafter, a heating/defrost operation and when performing a cooling operation and a heating operation will be described in detail.

First, when performing a cooling operation, the compressors 22 and 24 are driven, the cooling/heating switching valve 38 is controlled to a cooling mode, the first and second hot gas valves 74 and 76 are controlled to a close mode, and a refrigerant compressed in the compressors 22 and 24 flows to the cooling/heating switching valve 38 instead of flowing to the first and second hot gas pipes 70, 71, and 72, as shown in FIG. 2.

A refrigerant flowed to the cooling/heating switching valve 38 is distributed and condensed to all of the plurality of refrigerant tubes 50 through the third refrigerant distribution device 48, and a refrigerant condensed while passing through the plurality of refrigerant tubes 50a, 50b, 50c, 50d, 50e, 50f, and 50g of an upper part of the plurality of refrigerant tubes 50 is flowed to the first refrigerant distribution device 44, and a refrigerant condensed while passing through the plurality of refrigerant tubes 50h, 50i, 50j, 50k, 501, 50m, and 50n of a lower part of the plurality of refrigerant tubes 50 is flowed to the second refrigerant distribution device 46.

As described above, a refrigerant flowed to the first refrigerant distribution device 44 and the second refrigerant distribution device 46 is gathered in the refrigerant pipes 54, 55, and 56 and is flowed to the indoor devices 1 to 4.

The refrigerant flowed to the indoor devices 1 to 4 is expanded in the indoor expansion device 13, is evaporated in the indoor heat exchanger 11, is flowed to the outdoor device 5, and is circulated to the compressors 22 and 24 after sequentially passing through the cooling/heating switching valve 38 and the accumulator 30.

Upon performing a heating operation, the compressors 22 and 24 are driven, the cooling/heating switching valve 38 is controlled to a heating mode, the first and second hot gas valves 74 and 76 are controlled to a close mode, and a refrigerant compressed in the compressors 22 and 24 flows to the cooling/heating switching valve 38 instead of flowing to the first and second hot gas pipes 70, 71, and 72, as shown in FIG. 3.

The refrigerant flowed to the cooling/heating switching valve 38 is flowed to the indoor devices 1 to 4 to be condensed in the indoor heat exchanger 13, is moved to the outdoor device 5 to be distributed, is expanded in the first and second expansion valves 58 and 60, is condensed while passing through the plurality of refrigerant tubes 50a, 50b, 50c, 50d, 50e, 50f, and 50g of an upper part of the plurality of refrigerant tubes 50 through the first refrigerant distribution device 44, and is condensed while passing through the plurality of refrigerant tubes 50h, 50i, 50j, 50k, 501, 50m, and 50n of a lower part of the plurality of refrigerant tubes 50 through the second refrigerant distribution device 46.

The condensed refrigerant is gathered in the third refrigerant distribution device 48 and is circulated to the compressors 22 and 24 after sequentially passing through the cooling/heating switching valve 38 and the accumulator 30.

While performing a heating operation, if a defrost condition is obtained, the controller 94 controls the first expansion valve 58 to be in a close mode while controlling the first hot gas valve 74 to be in an opening mode.

When performing such a control process, as shown in FIG. 4, some of a refrigerant compressed in the compressors 22 and 24 flows to the first refrigerant distribution device 44 after passing through the hot gas pipes 70 and 71 and the first hot gas valve 74, and the remaining portion of the refrigerant is condensed while passing through the indoor devices 1 to 4 after passing through the cooling/heating switching valve 38 and flows to the second refrigerant distribution device 46 after being expanded while passing through the second expansion valve 60, as in a heating operation.

In this case, most of hot gas flowed to the first refrigerant distribution device 44 flows to the plurality of refrigerant tubes 50a, 50b, 50c, 50d, 50e, 50f, and 50g of an upper part of the plurality of refrigerant tubes 50 through the branch pipes 44a, 44b, 44c, 44d, 44e, 44f, and 44g of the first refrigerant distribution device 44, and some of hot gas flows to the uppermost branch pipe 46a of the second refrigerant distribution device 46 through the communication pipe 80.

The expanded refrigerant flowed to the second refrigerant distribution device 46 flows to the branch pipes 46a, 46b, 46c, 46d, 46e, 46f, and 46g of the second refrigerant distribution device 46, and an expanded refrigerant flowing to the uppermost branch pipe 46a is mixed with hot gas injected through the communication pipe 80.

When the hot gas and the expanded refrigerant flow, while a refrigerant of a high temperature flows to the plurality of refrigerant tubes 50a, 50b, 50c, 50d, 50e, 50f, and 50g of an upper part, defrost is performed and in refrigerant tubes 50i, 50j, 50k, 501, 50m, and 50n other than the uppermost refrigerant tube 50h of the plurality of refrigerant tubes 50h, 50i, 50j, 50k, 501, 50m, and 50n of a lower part, evaporation is performed while a refrigerant of a low temperature flows, while a refrigerant (mixed refrigerant of hot gas and an expanded refrigerant) of a temperature relatively higher than the plurality of refrigerant tubes 50h, 50i, 50j, 50k, 501, 50m, and 50n of a lower part flows, defrost is performed.

That is, as described above, when a refrigerant flows, in the plurality of refrigerant tubes 50, the uppermost refrigerant tube 50h of the plurality of refrigerant tubes 50h, 50i, 50j, 50k, 501, 50m, and 50n of a lower part as well as the plurality of refrigerant tubes 50a, 50b, 50c, 50d, 50e, 50f, and 50g of an upper part are defrosted together, and in the outdoor heat exchanger 42, while an upper part and a central part are defrosted together, a lower part functions as an evaporator.

As described above, the refrigerant passing through the plurality of refrigerant tubes 50 is gathered in the third refrigerant distribution device 48 and is circulated to the compressors 22 and 24 through the cooling/heating switching valve 38 and the accumulator 30.

As described above, when defrost of an upper part/heating of a lower part is performed during a predetermined time period, or when a temperature detected in the temperature sensor 92 rises a defrost release temperature or more of an upper part, the controller 94 controls the first expansion valve 58 to be in an opening mode while controlling the first hot gas valve 74 to be in a close mode and controls the second expansion valve 60 to be in a close mode while controlling the second hot gas valve 76 to be in an opening mode.

When performing such a control process, as shown in FIG. 5, some of a refrigerant compressed in the compressors 22 and 24 flows to the second refrigerant distribution device 46 after passing through the hot gas pipes 70 and 72 and the second hot gas valve 76, and the remaining portion is condensed while passing through the indoor devices 1 to 4 after passing through the cooling/heating switching valve 38 and flows to the first refrigerant distribution device 44 after being expanded while passing through the first expansion valve 58, as in a heating operation.

In this case, most of hot gas flowed to the second refrigerant distribution device 46 flows to the plurality of refrigerant tubes 50h, 50i, 50j, 50k, 501, 50m, and 50n of a lower part of the plurality of refrigerant tubes 50 through the branch pipes 46a, 46b, 46c, 46d, 46e, 46f, and 46g of the second refrigerant distribution device 46, and some thereof flows to the lowest branch pipe 44g of the first refrigerant distribution device 44 through the communication pipe 80.

An expanded refrigerant flowed to the first refrigerant distribution device 44 flows to the branch pipes 44a, 44b, 44c, 44d, 44e, 44f, and 44g of the first refrigerant distribution device 44, and an expanded refrigerant flowing to the lowest branch pipe 44g is mixed with hot gas injected through the communication pipe 80.

When the hot gas and the expanded refrigerant flow, while a refrigerant of a high temperature flows to the plurality of refrigerant tubes 50h, 50i, 50j, 50k, 501, 50m, and 50n of a lower part, defrost is performed and while a refrigerant of a low temperature flows to the refrigerant tubes 50a, 50b, 50c, 50d, 50e, and 50f other than the lowest refrigerant tube 50g of the plurality of refrigerant tubes 50a, 50b, 50c, 50d, 50e, 50f, and 50g of an upper part, evaporation is performed, and defrost is performed while a refrigerant (mixed refrigerant of hot gas and an expanded refrigerant) of a relatively higher temperature than that of the refrigerant tubes 50a, 50b, 50c, 50d, 50e, and 50f of the upper side of the lowest refrigerant tube 50g flows to the lowest refrigerant tube 50g of the plurality of refrigerant tubes 50a, 50b, 50c, 50d, 50e, 50f, and 50g of an upper part.

That is, as described above, when a refrigerant flows, in the plurality of refrigerant tubes 50, the lowest refrigerant tube 50g of the plurality of refrigerant tubes 50a, 50b, 50c, 50d, 50e, 50f, and 50g of an upper part as well as the plurality of refrigerant tubes 50h, 50i, 50j, 50k, 50l, 50m, and 50n of a lower part are defrosted together, and thus in the outdoor heat exchanger 42, while the lower part and the central part are defrosted together, an upper part functions as an evaporator.

As described above, a refrigerant passing through the plurality of refrigerant tubes 50 is gathered in the third refrigerant distribution device 48 and then is circulated to the compressors 22 and 24 through the cooling/heating switching valve 38 and the accumulator 30.

That is, as described above, when the defrost is performed, in the indoor heat exchanger 42, a central part and an upper part are defrosted together, and then a lower part is defrosted and thus the central part is effectively defrosted, and the entire indoor heat exchanger 42 is effectively defrosted.

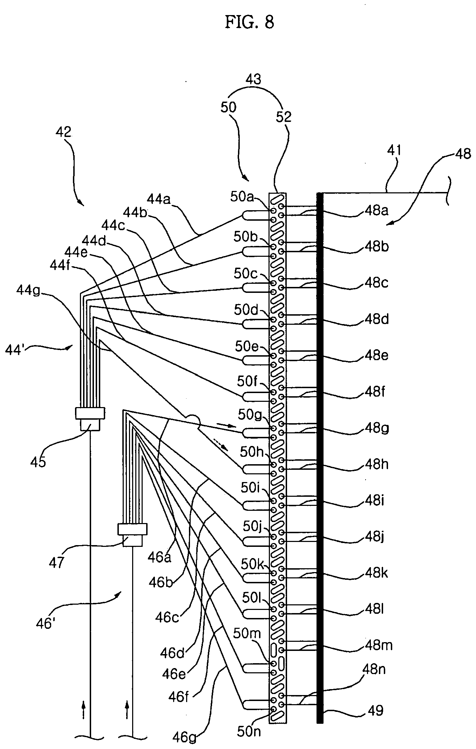

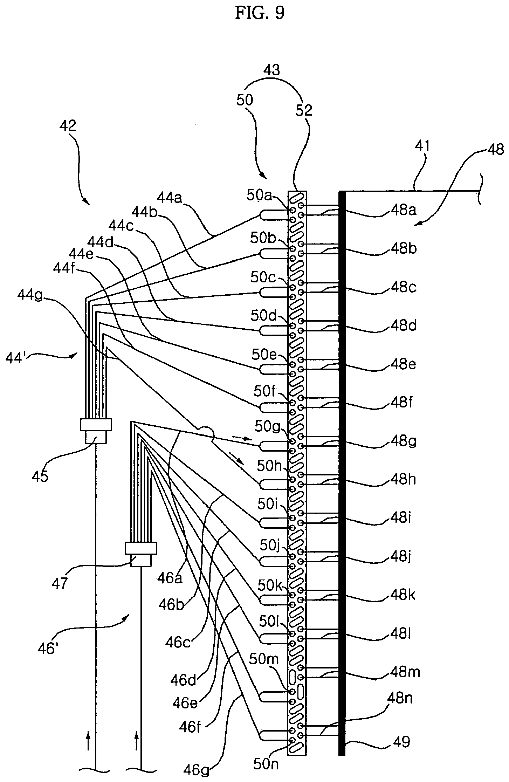

FIG. 8 is an enlarged schematic diagram illustrating a refrigerant flow of an outdoor device when performing defrost of an upper part/evaporation of a lower part of an outdoor heat exchanger of an air conditioner according to another example, and FIG. 9 is an enlarged schematic diagram illustrating refrigerant flow of the outdoor device of figure 8 when performing defrost of a lower part/evaporation of the upper part of the outdoor heat exchanger.

As shown in FIGS. 8 and 9, a first refrigerant distribution device 44 and a second refrigerant distribution device 46 are connected differently from those of an exemplary embodiment of the present invention, and other configurations other than the first refrigerant distribution device 44 and the second refrigerant distribution device 46 and operation thereof are equal to or similar to that of an exemplary embodiment of the present invention, and therefore a detailed description thereof will be omitted.

In the first refrigerant distribution device 44, branch pipes 44a, 44b, 44c, 44d, 44e, and 44f are connected to refrigerant tubes 50a, 50b, 50c, 50d, 50e, and 50f, respectively, other than a lowest refrigerant tube 50g of the plurality of refrigerant tubes 50a, 50b, 50c, 50d, 50e, 50f, and 50g of an upper part of a plurality of refrigerant tubes 50, and a branch pipe 44g is connected to an uppermost refrigerant tube 50h of a plurality of refrigerant tubes 50h, 50i, 50j, 50k, 50l, 50m, and 50n of a lower part of the plurality of refrigerant tubes 50.

In the second refrigerant distribution device 46, branch pipes 46b, 46c, 46d, 46e, 46f, and 46g are connected to refrigerant tubes 50i, 50j, 50k, 50l, 50m, and 50n, respectively, other than an uppermost refrigerant tube 50h of a plurality of refrigerant tubes 50h, 50i, 50j, 50k, 50l, 50m, and 50n of a lower part of the plurality of refrigerant tubes 50, and the branch pipe 46a is connected to a lowest refrigerant tube 50g of a plurality of refrigerant tubes 50a, 50b, 50c, 50d, 50e, 50f, and 50g of an upper part of the plurality of refrigerant tubes 50.

That is, the lowest branch pipe 44g of the first refrigerant distribution device 44 according to the present example and the uppermost branch pipe 46a of the second refrigerant distribution device 46 are connected to deviate from each other.

In the outdoor heat exchanger 42 having the above-described configuration, when performing defrost in an upper part/evaporation in a lower part, most of hot gas flowed to the first refrigerant distribution device 44 flow to the plurality of refrigerant tubes 50a, 50b, 50c, 50d, 50e, and 50f of an upper part of the plurality refrigerant tubes 50 through the branch pipes 44a, 44b, 44c, 44d, 44e, and 44f of the first refrigerant distribution device 44 and some thereof flows to the uppermost refrigerant tube 50h of the plurality of refrigerant tubes 50h, 50i, 50j, 50k, 501, 50m, and 50n of a lower part through the branch pipe 44g.

Most of an expanded refrigerant flowed to the second refrigerant distribution device 46 flows to the plurality of refrigerant tubes 50i, 50j, 50k, 501, 50m, and 50n of a lower part of the plurality of refrigerant tubes 50 through the branch pipes 46b, 46c, 46d, 46e, 46f, and 46g of the second refrigerant distribution device 46, and some thereof flows to the lowest refrigerant tube 50g of the plurality of refrigerant tubes 50a, 50b, 50c, 50d, 50e, 50f, and 50g of an upper part through the branch pipe 46a.

When hot gas and an expanded refrigerant flow, the refrigerant tubes 50a, 50b, 50c, 50d, 50e, and 50f other than the lowest refrigerant tube 50g of the plurality of refrigerant tubes 50a, 50b, 50c, 50d, 50e, 50f, and 50g of an upper part and defrost is performed while a refrigerant of a high temperature flows to the uppermost refrigerant tube 50h of the plurality of refrigerant tubes 50h, 50i, 50j, 50k, 501, 50m, and 50n of a lower part.

Evaporation is performed while a refrigerant of a lower temperature flows to the refrigerant tubes 50i, 50j, 50k, 501, 50m, and 50n other than the uppermost refrigerant tube 50h of the plurality of refrigerant tubes 50h, 50i, 50j, 50k, 501, 50m, and 50n of a lower part and to the lowest refrigerant tube 50g of the plurality of refrigerant tubes 50a, 50b, 50c, 50d, 50e, 50f, and 50g of an upper part.

That is, in the plurality of refrigerant tubes 50, most of the plurality of refrigerant tubes 50a, 50b, 50c, 50d, 50e, and 50f of an upper part and the uppermost refrigerant tube 50h of the plurality of refrigerant tubes 50h, 50i, 50j, 50k, 501, 50m, and 50n of a lower part are defrosted together and while an upper part and a central part of the outdoor heat exchanger 42 are defrosted together, a lower part thereof functions as an evaporator.

On the contrary, in the outdoor heat exchanger 42 having the above-described configuration, when performing defrost in a lower part/evaporation in an upper part, while hot gas flows to the refrigerant tubes 50i, 50j, 50k, 501, 50m, and 50n other than the uppermost refrigerant tube 50h of the plurality of refrigerant tubes 50h, 50i, 50j, 50k, 501, 50m, and 50n of a lower part and to the lowest refrigerant tube 50g of the plurality of refrigerant tubes 50a, 50b, 50c, 50d, 50e, 50f, and 50g of an upper part, defrost is performed.

Evaporation is performed while an expanded refrigerant flows to the refrigerant tubes 50a, 50b, 50c, 50d, 50e, and 50f other than the lowest refrigerant tube 50g of the plurality of refrigerant tubes 50a, 50b, 50c, 50d, 50e, 50f, and 50g of an upper part and to the uppermost refrigerant tube 50h of the plurality of refrigerant tubes 50h, 50i, 50j, 50k, 501, 50m, and 50n of a lower part.

That is, in the plurality of refrigerant tubes 50, most of the plurality of refrigerant tubes 50i, 50j, 50k, 501, 50m, and 50n of a lower part and the lowest refrigerant tube 50g of the plurality of refrigerant tubes 50a, 50b, 50c, 50d, 50e, 50f, and 50g of an upper part are defrosted together, and while a lower part and a central part of the outdoor heat exchanger 42 are defrosted together, an upper part thereof functions as an evaporator.

In an air conditioner according to the present invention, when an outdoor heat exchanger performs division defrost, the remaining frost of a central part can be also removed and thus high defrost performance can be obtained.

As described above, in the air conditioner according to the present invention, each of an upper part and a lower part of an outdoor heat exchange unit can be defrosted while continuing to perform a heating operation, and hot gas flowed through a communication pipe can defrost a central part of the outdoor heat exchange unit, and upon performing division defrost of an upper part of the outdoor heat exchange unit or division defrost of a lower part thereof, and the remaining frost of a central part of the outdoor heat exchanger can also be removed.

In a further example, with a simple structure in which the branch pipe is connected to cross to the refrigerant tube, a central part of the outdoor heat exchange unit can be also defrosted.

The embodiment of the invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. An air conditioner comprising an outdoor heat exchange unit (43) in which a plurality of refrigerant tubes are disposed to be separated in a plurality of columns in a vertical direction to exchange heat of outdoor air and a refrigerant, the air conditioner further comprising:
a first refrigerant distribution device (44) having branch pipes connected to a plurality of refrigerant tubes, respectively, of an upper part among the plurality of refrigerant tubes;
a second refrigerant distribution device (46) having branch pipes connected to a plurality of refrigerant tubes, respectively, of a lower part among the plurality of refrigerant tubes; and **characterised in that** the air conditioner further comprises a communication pipe (80) for communicating one of the branch pipes of the first refrigerant distribution device and one of the branch pipes of the second refrigerant distribution device.

2. The air conditioner of claim 1, wherein the communication pipe (80) connects a lowest branch pipe of the branch pipes of the first refrigerant distribution device (44) and an uppermost branch pipe of the branch pipes of the second refrigerant distribution device (46).

3. The air conditioner of claim 1, further comprising a third refrigerant distribution device (48) connected to all of the plurality of refrigerant tubes using the branch pipe.

4. The air conditioner of any one of claims 1 to 3, further comprising:
compressors (22)(24) for compressing a refrigerant;
hot gas pipes (70)(71)(72) for connecting outlets (22)(24) of the compressors and inlets of the first and second refrigerant distribution devices (44)(46), respectively;
a first hot gas valve (74) for adjusting hot gas flowing from the outlet of the compressor to the first refrigerant distribution device (44) through the hot gas pipe; and
a second hot gas valve (76) for adjusting hot gas flowing from the outlet of the compressor to the second refrigerant distribution device (46) through the hot gas pipe.

5. The air conditioner of claim 4, wherein the hot gas pipes (70)(71)(72) connect the outlets of the compressors (22)(24) and the inlets of the first and second refrigerant distribution devices (44)(46) based on when performing a heating operation of the air conditioner.

6. The air conditioner of claim 5, further comprising:
a first expansion valve (58) for intercepting injection of a refrigerant to the first refrigerant distribution device (44) when hot gas is injected through the first hot gas valve; and
a second expansion valve (60) for intercepting injection of a refrigerant to the second refrigerant distribution device (46) when hot gas is injected through the second hot gas valve.

7. The air conditioner of claim 6, wherein the hot gas pipes (70)(71)(72) comprise:
a sharing hot gas pipe (70) connected to a cooling/heating switching valve connection pipe (33) between a cooling/heating switching valve for switching cooling/heating and the compressors;
a first refrigerant distribution device connection pipe (71) for connecting the sharing hot gas pipe (70) and the inlet of the first refrigerant distribution device (44); and
a second refrigerant distribution device connection pipe (72) for connecting the sharing hot gas pipe (71) and the inlet of the second refrigerant distribution device (46).

8. The air conditioner of claim 7, wherein the first expansion valve (58) is installed in the first refrigerant distribution device connection pipe (71), and
the second expansion valve (60) is installed in the second refrigerant distribution device connection pipe (72).

## Patentansprüche

1. Klimaanlage, umfassend eine Außen-Wärmetauscheinheit (43), in welcher eine Mehrzahl von Kühlmittelrohren dazu angeordnet ist, in eine Mehrzahl von Säulen in einer vertikalen Richtung aufgetrennt zu sein, um Wärme von Außenluft und einem Kühlmittel zu tauschen, wobei die Klimaanlage ferner umfasst:
eine erste Kühlmittel-Verteilungsvorrichtung (44), welche Zweigleitungen aufweist, welche jeweils mit einer Mehrzahl von Kühlmittelrohren eines oberen Teils aus der Mehrzahl von Kühlmittelrohren verbunden sind;
eine zweite Kühlmittel-Verteilungsvorrichtung (46), welche Zweigleitungen aufweist, welche jeweils mit einer Mehrzahl von Kühlmittelrohren eines unteren Teils aus der Mehrzahl von Kühlmittelrohren verbunden sind;
und **dadurch gekennzeichnet, dass** die Klimaanlage ferner eine Verbindungsleitung (80) zum Verbinden einer der Zweigleitungen der ersten Kühlmittel-Verteilungsvorrichtung und einer der Zweigleitungen der zweiten Kühlmittel-Verteilungsvorrichtung umfasst.

2. Klimaanlage nach Anspruch 1, wobei die Verbindungsleitung (80) eine unterste Zweigleitung der Zweigleitungen der ersten Kühlmittel-Verteilungsvorrichtung (44) und eine oberste Zweigleitung der Zweigleitungen der zweiten Kühlmittel-Verteilungsvorrichtung (46) verbindet.

3. Klimaanlage nach Anspruch 1, ferner umfassend eine dritte Kühlmittel-Verteilungsvorrichtung (48), welche mit allen aus der Mehrzahl von Kühlmittelrohren unter Verwendung der Zweigleitung verbunden ist.

4. Klimaanlage nach einem der Ansprüche 1 bis 3, ferner umfassend:
Kompressoren (22)(24) zum Komprimieren eines Kühlmittels;
Heißgasleitungen (70)(71)(72) zum jeweiligen Verbinden von Auslässen (22)(24) der Kompressoren und Einlässen der ersten und zweiten Kühlmittel-Verteilungsvorrichtung (44)(46);
ein erstes Heißgasventil (74) zum Einstellen von heißem Gas, welches von dem Auslass des Kompressors zu der ersten Kühlmittel-Verteilungsvorrichtung (44) durch die Heißgasleitung strömt; und
ein zweites Heißgasventil (76) zum Einstellen von heißem Gas, welches von dem Auslass des Kompressors zu der zweiten Kühlmittel-Verteilungsvorrichtung (46) durch die Heißgasleitung strömt.

5. Klimaanlage nach Anspruch 4, wobei die Heißgasleitungen (70)(71)(72) die Auslässe der Kompressoren (22)(24) und die Einlässe der ersten und zweiten Kühlmittel-Verteilungsvorrichtung (44)(46) auf Grundlage dessen verbinden, wann ein Heizbetrieb der Klimaanlage durchgeführt wird.

6. Klimaanlage nach Anspruch 5, ferner umfassend:
ein erstes Entspannungsventil (58) zum Abstellen einer Eingabe eines Kühlmittels an die erste Kühlmittel-Verteilungsvorrichtung (44), wenn heißes Gas durch das erste Heißgasventil eingegeben wird; und
ein zweites Entspannungsventil (60) zum Abstellen einer Eingabe eines Kühlmittels an die zweite Kühlmittel-Verteilungsvorrichtung (46), wenn heißes Gas durch das zweite Heißgasventil eingegeben wird.

7. Klimaanlage nach Anspruch 6, wobei die Heißgasleitungen (70)(71)(72) umfassen:
eine Teilungs-Heißgasleitung (70), welche mit einer Kühl/Heiz-Schaltventil-Verbindungsleitung (33) zwischen einem Kühl/Heiz-Schaltventil zum Schalten von Kühlen/Heizen und den Kompressoren verbunden ist;
eine erste Kühlmittel-Verteilungsvorrichtung-Verbindungsleitung (71) zum Verbinden der Teilungs-Heißgasleitung (70) und des Einlasses der ersten Kühlmittel-Verteilungsvorrichtung (44); und
eine zweite Kühlmittel-Verteilungsvorrichtung-Verbindungsleitung (72) zum Verbinden der Teilungs-Heißgasleitung (71) und des Einlasses der zweiten Kühlmittel-Verteilungsvorrichtung (46).

8. Klimaanlage nach Anspruch 7, wobei das erste Entspannungsventil (58) in der ersten Kühlmittel-Verteilungsvorrichtung-Verbindungsleitung (71) installiert ist, und
das zweite Entspannungsventil (60) in der zweiten Kühlmittel-Verteilungsvorrichtung-Verbindungsleitung (72) installiert ist.

## Revendications

1. Climatiseur comprenant une unité d'échange de chaleur extérieure (43) dans laquelle une pluralité de tubes de réfrigérant sont disposés pour être séparés en une pluralité de colonnes dans une direction verticale pour échanger la chaleur de l'air extérieur et un réfrigérant, le climatiseur comprenant en outre :
un premier dispositif de distribution de réfrigérant (44) ayant des tuyaux de dérivation raccordés à une pluralité de tubes de réfrigérant, respectivement, d'une partie supérieure parmi la pluralité de tubes de réfrigérant ;
un deuxième dispositif de distribution de réfrigérant (46) ayant des tuyaux de dérivation raccordés à une pluralité de tubes de réfrigérant, respectivement, d'une partie inférieure parmi la pluralité de tubes de réfrigérant ; et **caractérisé en ce que** le climatiseur comprend en outre
un tuyau de communication (80) pour faire communiquer l'un des tuyaux de dérivation du premier dispositif de distribution de réfrigérant et l'un des tuyaux de dérivation du deuxième dispositif de distribution de réfrigérant.

2. Climatiseur de la revendication 1, dans lequel le tuyau de communication (80) raccorde le tuyau de dérivation le plus inférieur des tuyaux de dérivation du premier dispositif de distribution de réfrigérant (44) et le tuyau de dérivation le plus supérieur des tuyaux de dérivation du deuxième dispositif de distribution de réfrigérant (46).

3. Climatiseur de la revendication 1, comprenant en outre un troisième dispositif de distribution de réfrigérant (48) raccordé à la totalité de la pluralité de tubes de réfrigérant en utilisant le tuyau de dérivation.

4. Climatiseur de l'une quelconque des revendications 1 à 3, comprenant en outre :
des compresseurs (22)(24) pour comprimer un réfrigérant ;
des tuyaux de gaz chaud (70) (71) (72) pour raccorder les sorties (22) (24) des compresseurs et les entrées des premier et deuxième dispositifs de distribution de réfrigérant (44) (46), respectivement ;
une première soupape à gaz chaud (74) pour régler le gaz chaud s'écoulant depuis la sortie du compresseur vers le premier dispositif de distribution de réfrigérant (44) à travers le tuyau de gaz chaud ; et
une deuxième soupape à gaz chaud (76) pour régler le gaz chaud s'écoulant depuis la sortie du compresseur vers le deuxième dispositif de distribution de réfrigérant (46) à travers le tuyau de gaz chaud.

5. Climatiseur de la revendication 4, dans lequel les tuyaux de gaz chaud (70)(71)(72) raccordent les sorties des compresseurs (22) (24) et les entrées des premier et deuxième dispositifs de distribution de réfrigérant (44) (46) sur la base du moment où on exécute une opération de chauffage du climatiseur.

6. Climatiseur de la revendication 5, comprenant en outre :
une première soupape de détente (58) pour intercepter l'injection d'un réfrigérant dans le premier dispositif de distribution de réfrigérant (44) lorsque le gaz chaud est injecté à travers la première soupape à gaz chaud ; et
une deuxième soupape de détente (60) pour intercepter l'injection d'un réfrigérant dans le deuxième dispositif de distribution de réfrigérant (46) lorsque le gaz chaud est injecté à travers la deuxième soupape à gaz chaud.

7. Climatiseur de la revendication 6, dans lequel les tuyaux de gaz chaud (70) (71) (72) comprennent :
un tuyau de gaz chaud de partage (70) raccordé à un tuyau de raccordement de soupape de commutation de refroidissement/chauffage (33) entre une soupape de commutation de refroidissement/chauffage pour une commutation de refroidissement/chauffage et les compresseurs ;
un tuyau de raccordement de premier dispositif de distribution de réfrigérant (71) pour raccorder le tuyau de gaz chaud de partage (70) et l'entrée du premier dispositif de distribution de réfrigérant (44) ; et
un tuyau de raccordement de deuxième dispositif de distribution de réfrigérant (72) pour raccorder le tuyau de gaz chaud de partage (71) et l'entrée du deuxième dispositif de distribution de réfrigérant (46).

8. Climatiseur de la revendication 7, dans lequel la première soupape de détente (58) est installée dans le tuyau de raccordement de premier dispositif de distribution de réfrigérant (71), et
la deuxième soupape de détente (60) est installée dans le tuyau de raccordement de deuxième dispositif de distribution de réfrigérant (72).
